# EUROPÄISCHE PATENTSCHRIFT

(11) **EP 1 983 711 B1**
(45) Veröffentlichungstag und Bekanntmachung des Hinweises auf die Patenterteilung: **12.06.2019**
(21) Anmeldenummer: 08103415.9
(22) Anmeldetag: 07.04.2008
(51) Int. Cl.: H04L 27/20

(54) **Digitaler Phasenmodulator und entsprechendes Verfahren**
Digital phase modulator and corresponding method
Modulateur de phase numérique et procédé correspondant

(30) Priorität: 17.04.2007 DE 102007018087
(43) Veröffentlichungstag der Anmeldung: 22.10.2008
(73) Patentinhaber: Sivantos GmbH, 91058 Erlangen (DE)
(72) Erfinder: Reithinger, Jürgen, 91077, Neunkirchen am Brand (DE)
(74) Vertreter: FDST Patentanwälte

(56) Entgegenhaltungen:
- EP-A1- 1 675 033
- EP-A2- 0 783 147
- DE-A1- 3 919 530

## Beschreibung

Die vorliegende Erfindung betrifft einen digitalen Phasenmodulator und ein entsprechendes Verfahren zum Erzeugen eines phasenmodulierten Signals. Insbesondere kann der digitale Phasenmodulator und das Verfahren für ein Hörgerät eingesetzt werden. Ein digitaler Phasenmodulator nach dem Oberbegriff des Anspruchs 1 und ein Verfahren zum Erzeugen eines phasenmodulierten digitalen Signals nach dem Oberbegriff des Anspruchs 7 sind aus EP 0 783 147 A2 bekannt. Weitere Modulationsverfahren sind aus DE 39 19 530 A1 und EP 1 675 033 A1 bekannt.

Zur Übertragung von Daten per Funk werden in der Regel Modulationen eines Trägersignals, beispielsweise die Amplitudenmodulation, die Frequenzmodulation oder die Phasenmodulation, durchgeführt. Für jede Modulation ist ein geeignetes Verfahren zu wählen. Die einzelnen Verfahren sind in der Hardware meist vergleichsweise kompliziert zu realisieren und eine Integration dieser Hardware in digitale Elektronikbausteine wie ASICs, FPGAs, CPLDs und ähnliche ist kaum möglich.

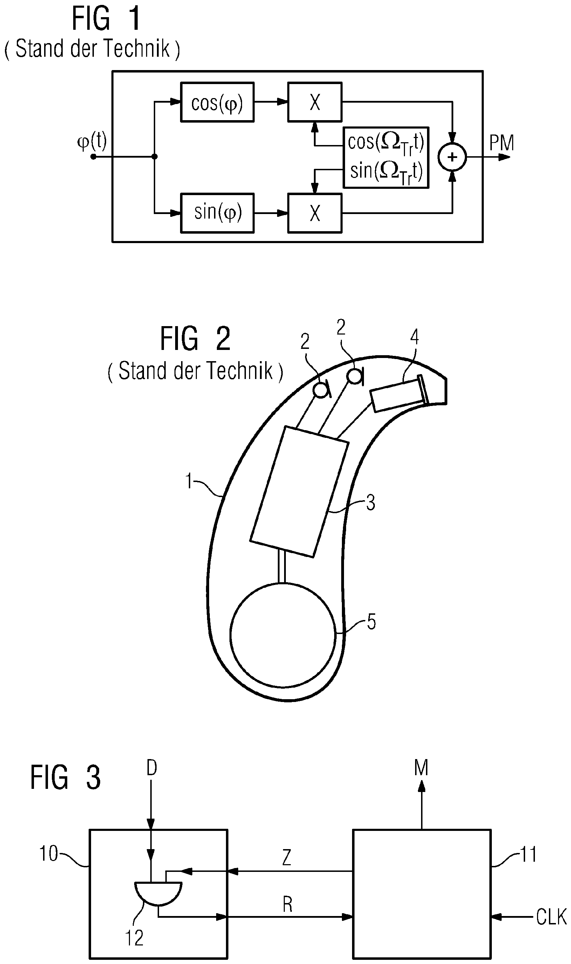

Bisherige Modulatoren arbeiten in der Regel gemäß FIG 1 mit spannungsgesteuerten Oszillatoren und mehreren gleichzeitig vorhandenen Phasenzweigen. So wird in dem Beispiel von FIG 1 ein Eingangssignal *ϕ*(*t*) des Phasenmodulators in zwei Teilzweige eingespeist. In dem ersten Zweig wird der Kosinusanteil und in dem zweiten Zweig der Sinusanteil des Signals ermittelt. Die beiden Anteile werden im jeweiligen Zweig mit einer gewünschten Phase Ω*_{Tr}t* verschoben. Anschließend werden sie in einem Addierer zu dem phasenmodulierten Signal PM zusammengefügt. Ein derartiger digitaler Phasenmodulator ist in der Druckschrift EP 0 551 573 A2 beschrieben.

Darüber hinaus ist aus der Patentschrift US 4 206 423 A ebenfalls ein digitaler Phasenmodulator bekannt, bei dem alle Phasen erzeugt werden. Speziell werden zwei Phasen mit separaten Taktbausteinen generiert. Diejenige Phase, die benötigt wird, wird mithilfe einer Phasenselektorlogik ausgewählt. Bei der Realisierung eines solchen Phasenmodulators sind also viele Leitungen für Signale unterschiedlicher Phasen gleicher Frequenz zu verlegen. Die Folge sind entsprechend hohe Interferenzen.

Zunehmend wird bei Hörgeräten auch drahtlose Kommunikation eingesetzt. Speziell bei der Übertragung digitaler Signale kann auch hier die Phasenmodulation von Vorteil sein. Da jedoch Hörgeräte in der Regel baulich sehr klein ausgebildet sind, liegen die Leitungen entsprechend nahe beisammen, so dass es bei üblichen Phasenmodulationsverfahren umso mehr zu Interferenzen kommt.

Hörgeräte sind tragbare Hörvorrichtungen, die zur Versorgung von Schwerhörenden dienen. Um den zahlreichen individuellen Bedürfnissen entgegenzukommen, werden unterschiedliche Bauformen von Hörgeräten wie Hinter-dem-Ohr-Hörgeräte (HdO) und In-dem-Ohr-Hörgeräte (IdO), z.B. auch Concha-Hörgeräte oder Kanal-Hörgeräte (CIC), bereitgestellt. Die beispielhaft aufgeführten Hörgeräte werden am Außenohr oder im Gehörgang getragen. Darüber hinaus stehen auf dem Markt aber auch Knochenleitungshörhilfen, implantierbare oder vibrotaktile Hörhilfen zur Verfügung. Dabei erfolgt die Stimulation des geschädigten Gehörs entweder mechanisch oder elektrisch.

Hörgeräte besitzen prinzipiell als wesentliche Komponenten einen Eingangswandler, einen Verstärker und einen Ausgangswandler. Der Eingangswandler ist in der Regel ein Schallempfänger, z. B. ein Mikrofon, und/oder ein elektromagnetischer Empfänger, z. B. eine Induktionsspule. Der Ausgangswandler ist meist als elektroakustischer Wandler, z. B. Miniaturlautsprecher, oder als elektromechanischer Wandler, z. B. Knochenleitungshörer, realisiert. Der Verstärker ist üblicherweise in eine Signalverarbeitungseinheit integriert. Dieser prinzipielle Aufbau ist in FIG 1 am Beispiel eines Hinter-dem-Ohr-Hörgeräts dargestellt. In ein Hörgerätegehäuse 1 zum Tragen hinter dem Ohr sind ein oder mehrere Mikrofone 2 zur Aufnahme des Schalls aus der Umgebung eingebaut. Eine Signalverarbeitungseinheit 3, die ebenfalls in das Hörgerätegehäuse 1 integriert ist, verarbeitet die Mikrofonsignale und verstärkt sie. Das Ausgangssignal der Signalverarbeitungseinheit 3 wird an einen Lautsprecher bzw. Hörer 4 übertragen, der ein akustisches Signal ausgibt. Der Schall wird gegebenenfalls über einen Schallschlauch, der mit einer Otoplastik im Gehörgang fixiert ist, zum Trommelfell des Geräteträgers übertragen. Die Stromversorgung des Hörgeräts und insbesondere die der Signalverarbeitungseinheit 3 erfolgt durch eine ebenfalls ins Hörgerätegehäuse 1 integrierte Batterie 5.

Die Aufgabe der vorliegenden Erfindung besteht darin, einen Phasenmodulator vorzuschlagen, der einen möglichst geringen Bauraum benötigt und der möglichst wenig durch Interferenzen beeinträchtigt ist. Außerdem soll ein entsprechendes Verfahren angegeben werden.

Erfindungsgemäß wird diese Aufgabe gelöst durch einen digitalen Phasenmodulator mit einem Zähler zum Ausgeben eines Zählersignals auf der Basis eines vorgegebenen Taktsignals und einem Vergleicher, der von dem Zähler einen aktuellen Zählerstand enthält, zum Aufnehmen eines digitalen Eingangssignals, Vergleichen des Eingangssignals mit dem aktuellen Zählerstand anhand einer vorgegebenen Zuordnungstabelle und zum Rücksetzen des Zählers, wenn das Eingangssignal einem durch die Zuordnungstabelle zugeordneten Zählerstand entspricht, so dass ein vorgegebener Signalwert des ausgegebenen Zählersignals in Abhängigkeit von dem Eingangssignal phasenmoduliert wird.

Außerdem wird erfindungsgemäß bereitgestellt ein Verfahren zum Erzeugen eines phasenmodulierten digitalen Signals durch kontinuierliches Hoch/Herabzählen eines Zählers auf der Basis eines vorgegebenen Taktsignals, Zuordnen jedes von mehreren Eingangssignalwerten zu einem Zählerwert des Zählers, Vergleichen eines aktuellen Eingangssignalwerts mit einem aktuellen Zählerwert und Rücksetzen des Zählers, wenn der Eingangssignalwert dem zugeordneten Zählerwert entspricht, so dass ein vorgegebener Signalwert des ausgegebenen Zählersignals in Abhängigkeit von dem Eingangssignal phasenmoduliert wird.

In vorteilhafter Weise wird also die Phasenmodulation mit nur einem Signalzweig erreicht. Die Störungen durch das eigene System sind dann deutlich geringer, da nur eine Phasenlage zu einem Zeitpunkt existiert und nicht mehrere gleichzeitig.

Vorzugsweise ist der vorgegebene Signalwert bei dem digitalen Phasenmodulator das MSB (most significant bit) des Zählers. Die Phasenverschiebung lässt sich dann leicht an der Position des MSB fest machen. Grundsätzlich können natürlich auch andere Werte des Zählers für den vorgegebenen Signalwert verwendet werden.

Das Taktsignal sollte mindestens die zweifache Frequenz des Eingangssignals besitzen, wenn das Eingangssignal einer BPSK-Modulation (Binary-Phase-Shift-Keying) unterzogen wird. Soll hingegen eine QPSK-Modulation (Quadrature-Phase-Shift-Keying) durchgeführt werden, so ist es notwendig, dass das Taktsignal mindestens die vierfache Frequenz des Eingangssignals besitzt. Speziell für Sendefrequenzen im LW-, MW- und KW-Bereich sind derartige Taktgeneratoren problemlos erhältlich.

Weiterhin ist es von Vorteil, wenn der Zähler mit einem Quarzoszillator getaktet ist. Damit sind sehr stabile Phasensprünge erreichbar.

Entsprechend einer weiteren vorteilhaften Ausführungsform sind der Zähler, der Vergleicher und eine Sendestufe in einen gemeinsamen Logikbaustein integriert. Auf diese Weise lässt sich ein Phasenmodulator mit geringem Bauraum und Sendefunktionalität sehr einfach realisieren. Es muss nur noch die externe Antenne angeschlossen werden.

Besonders vorteilhaft ist die Anwendung des erfindungsgemäßen digitalen Phasenmodulators bzw. des genannten erfindungsgemäßen Verfahrens bei einem Hörgerät. Hier kann man nämlich besonders von der geringen Baugröße dieses digitalen Phasenmodulators sowie den damit verbundenen verminderten Störungen profitieren. Einsetzbar ist es darüber hinaus auch bei zugehörigen Fernbedienungen.

Die vorliegende Erfindung ist anhand der beigefügten Zeichnungen näher erläutert, in denen zeigen:
- FIG 1: einen Schaltplan eines Phasenmodulators gemäß dem Stand der Technik;
- FIG 2: den prinzipiellen Aufbau eines Hörgeräts gemäß dem Stand der Technik und
- FIG 3: den prinzipiellen Aufbau eines digitalen Phasenmodulators gemäß der vorliegenden Erfindung.

Das nachfolgend näher geschilderte Ausführungsbeispiel stellt eine bevorzugte Ausführungsform der vorliegenden Erfindung dar.

Das in FIG 3 wiedergegebene Ausführungsbeispiel eines erfindungsgemäßen digitalen Phasenmodulators besteht nur aus zwei wesentlichen Komponenten, einem Vergleicher 10 und einem Zähler 11. Der Vergleicher 10 nimmt die digitalen Daten D auf, die in ihrer Phase zu modulieren sind. Außerdem erhält der Vergleicher 10 von dem Zähler 11 einen Zählerstand Z. In dem Vergleicher 10 werden die Daten D und der Zählerstand Z, symbolisiert durch ein UND-Gatter 12, miteinander verglichen. Das Ausgangssignal des UND-Gatters 12 dient als Reset-Signal R zum synchronen Zurücksetzen des Zählers 11 und wird diesem entsprechend zugeleitet.

Der Zähler 11 wird selbst von einem Takt CLK, der eine mehrfach höhere Frequenz als das Eingangssignal D besitzt, gespeist. Das Ausgangssignal M des Zählers 11 ist das entsprechend phasenmodulierte Eingangssignal.

Es kann also aus FIG 3 erkannt werden, dass bei dem Phasenmodulator für die digitale Datenübertragung statt mehrere Signalzweige für Signale mit den jeweiligen Phasenlagen ein einfacher, binärer Zähler 11 verwendet werden kann. Er zählt beispielsweise für BPSK von 0 bis 3 bzw. für QPSK/BPSK von 0 bis 7. Der Zähler 11 wird mit einem Vielfachen der Sendefrequenz betrieben, wobei die Größe des Vielfachen von dem gewünschten Modulationsverfahrens abhängt. Für niedrige Sendefrequenzen im unteren Megahertzbereich (LW, MW, KW) sind Zähler mit entsprechend hohen Taktfrequenzen ohne weiteres erhältlich. Das Vielfache bzw. der Multiplikator gegenüber der Sendefrequenz ist beispielsweise bei BPSK-Modulation mindestens zwei und bei QPSK-Modulation mindestens vier. Der Multiplikator ergibt sich direkt aus den Phasensprüngen. Dabei gilt: Phasensprung x Multiplikator = 360°.

Der Zähler 11 wird über den Vergleicher 10 synchron zurückgesetzt, wenn der Vergleicher 10 ein oder mehrere Eingangsdatenbits und den zugehörigen Zählerstand detektiert. Besteht beispielsweise das Eingangssignal D aus Zwei-Bit-Daten, so kann die Phasenmodulation dadurch erfolgen, dass dem Wert 00 der Zählerstand 1, dem Wert 01 der Zählerstand 3, dem Wert 10 der Zählerstand 5 und dem Wert 11 der Zählerstand 7 zugeordnet wird. Der Zähler besitzt hier die achtfache Taktfrequenz gegenüber dem Eingangssignal. D. h. so lange ein Datenwert anliegt, zählt der Zähler von 1 bis 8 bzw. von 0 bis 7. Stimmen beide Werte überein, so gibt der Vergleicher 10 ein Reset-Signal R an den Zähler 11 aus. Der Zähler 11 sendet sein MSB als Ausgangssignal M aus. Das MSB steht zeitlich in einem festen Zusammenhang mit dem Rücksetzen und das Rücksetzen wiederum erfolgt in Abhängigkeit von den Eingangsdaten D. Somit werden die Eingangsdaten D phasenmoduliert von dem Zähler 11 ausgegeben. Es wird also in dem Zähler 11 eine Verschiebung erzeugt, da er je nach Eingangssignal nicht den kompletten Zählerbereich durchläuft, sondern entsprechend der Stelle, an der der Reset ausgelöst wird, weniger.

Wie FIG 3 zeigt, kann auf einfache Weise mittels digitaler Bausteine eine Phasenmodulation realisiert werden. Dabei kann der Zähler 11 mit einem Quarzoszillator getaktet werden (CLK). Damit ergeben sich quarzstabile Sendefrequenzen und sehr exakte Phasensprünge. Außerdem brauchen die verschiedenen Phasenlagen nicht permanent vorhanden zu sein. Hierdurch ergeben sich deutlich weniger Störsignale aufgrund von Interferenzen. Es wird hier nämlich nur die Sendefrequenz mit der gerade aktuellen Phasenlage generiert. D. h. da die anderen Phasenlagen nicht vorhanden sind, kommt es auch zu keinen Interferenzen zwischen den Phasenlagen. Der Phasensprung wird hingegen genau dann erzeugt, wenn es nötig ist.

Eine konkrete Realisierung kann darin bestehen, dass der Vergleicher 10 und der Zähler 11 in einen logischen Schaltkreis, wie einen CPLD, ASIC, etc. integriert werden. Der Ausgang der Schaltung liefert das modulierte Sendesignal und wird gegebenenfalls an einen Sendeverstärker gelegt. Bei niedrigen Sendeleistungen kann auf einen derartigen Verstärker verzichtet werden. In diesem Fall kann eine Antenne direkt an den Logikbaustein angeschlossen werden, um einen vollständigen Sender zu realisieren.

Optional kann eine erforderliche Datenverarbeitung ebenfalls in dem gleichen Baustein untergebracht werden. Somit lässt sich ein Ein-IC-Sender mittels einfacher, kostengünstiger Logikbausteine realisieren. Wenn ohnehin ein Logikbaustein im System vorhanden ist, kann dieser für den Sender inklusiv Modulator mit verwendet werden. Es entsteht in diesem Fall kein zusätzlicher Schaltungsaufwand, wodurch kostengünstige Lösungen realisierbar sind. Das ist speziell für Fernbedienungen von Vorteil.

## Patentansprüche

1. Digitaler Phasenmodulator mit
- einem Zähler (11) zum Ausgeben eines Zählersignals (M) auf der Basis eines vorgegebenen Taktsignals (CLK) und
- einem Vergleicher (10), der von dem Zähler einen aktuellen Zählerstand (Z) enthält, zum Aufnehmen eines digitalen Eingangssignals (D) und zum Vergleichen des Eingangssignals (D) mit dem aktuellen Zählerstand (Z)
**dadurch gekennzeichnet, dass** der Vergleicher (10) dazu ausgebildet ist, das Eingangssignal (D) anhand einer vorgegebenen Zuordnungstabelle mit dem aktuellen Zählerstand (Z) zu vergleichen und den Zähler (11) zurückzusetzen, wenn das Eingangssignal (D) einem durch die Zuordnungstabelle zugeordneten Zählerstand entspricht, so dass
- ein vorgegebener Signalwert des ausgegebenen Zählersignals (M) in Abhängigkeit von dem Eingangssignal (D) phasenmoduliert wird.

2. Digitaler Phasenmodulator nach Anspruch 1, wobei der vorgegebene Signalwert das MSB des Zählers (11) ist.

3. Digitaler Phasenmodulator nach Anspruch 1 oder 2, wobei das Taktsignal (CLK) mindestens die zweifache Frequenz des Eingangssignals (D) besitzt, und das Eingangssignal (D) durch den Zähler (11) einer BPSK-Modulation unterzogen wird.

4. Digitaler Phasenmodulator nach Anspruch 1 oder 2, wobei das Taktsignal (CLK) mindestens die vierfache Frequenz des Eingangssignals (D) besitzt, und das Eingangssignal (D) durch den Zähler (11) einer QPSK-Modulation unterzogen wird.

5. Digitaler Phasenmodulator nach einem der vorhergehenden Ansprüche, wobei der Zähler (11) mit einem Quarzoszillator getaktet ist.

6. Digitaler Phasenmodulator nach einem der vorhergehenden Ansprüche, wobei der Zähler (11), der Vergleicher (10) und eine Sendestufe in einen gemeinsamen Logikbaustein integriert sind.

7. Verfahren zum Erzeugen eines phasenmodulierten digitalen Signals durch
- kontinuierliches Hoch- oder Herabzählen eines Zählers (11) auf der Basis eines vorgegebenen Taktsignals (CLK),
- Zuordnen jedes von mehreren Eingangssignalwerten zu einem Zählerwert des Zählers (11) und
- Vergleichen eines aktuellen Eingangssignalwerts mit einem aktuellen Zählerwert,
**gekennzeichnet durch**
- Rücksetzen des Zählers (11), wenn der Eingangssignalwert einem durch eine vorgegebene Zuordnungstabelle zugeordneten Zählerwert entspricht, so dass
- ein vorgegebener Signalwert des ausgegebenen Zählersignals (M) in Abhängigkeit von dem Eingangssignal phasenmoduliert wird.

8. Verfahren nach Anspruch 7, wobei der vorgegebene Signalwert das MSB des Zählers (11) ist.

9. Verfahren nach Anspruch 7 oder 8, wobei das Taktsignal (CLK) mindestens die zweifache Frequenz des Eingangssignals besitzt, und das Eingangssignal (D) durch den Zähler (11) einer BPSK-Modulation unterzogen wird.

10. Verfahren nach Anspruch 7 oder 8, wobei das Taktsignal (CLK) mindestens die vierfache Frequenz des Eingangssignals besitzt, und das Eingangssignal (D) durch den Zähler (11) einer QPSK-Modulation unterzogen wird.

11. Hörgerät mit einem digitalen Phasenmodulator nach einem der Ansprüche 1 bis 6.

12. Fernbedienung mit einem digitalen Phasenmodulator nach einem der Ansprüche 1 bis 6.

## Claims

1. Digital phase modulator having
- a counter (11) for outputting a counter signal (M) on the basis of a prescribed clock signal (CLK), and
- a comparator (10), containing a present counter reading (Z) from the counter, for receiving a digital input signal (D) and for comparing the input signal (D) with the present counter reading (Z),
**characterized in that** the comparator (10) is designed to compare the input signal (D) with the present counter reading (Z) on the basis of a prescribed allocation table and to reset the counter (11) when the input signal (D) corresponds to a counter reading allocated by the allocation table, so that
- a prescribed signal value of the output counter signal (M) is phase-modulated on the basis of the input signal (D).

2. Digital phase modulator according to Claim 1, wherein the prescribed signal value is the MSB of the counter (11).

3. Digital phase modulator according to Claim 1 or 2, wherein the clock signal (CLK) has at least twice the frequency of the input signal (D), and the input signal (D) is subjected to a BPSK modulation by the counter (11).

4. Digital phase modulator according to Claim 1 or 2, wherein the clock signal (CLK) has at least four times the frequency of the input signal (D), and the input signal (D) is subjected to a QPSK modulation by the counter (11).

5. Digital phase modulator according to one of the preceding claims, wherein the counter (11) is clocked using a quartz oscillator.

6. Digital phase modulator according to one of the preceding claims, wherein the counter (11), the comparator (10) and a transmission stage are integrated in a common logic chip.

7. Method for generating a phase-modulated digital signal by
- continuously incrementing or decrementing a counter (11) on the basis of a prescribed clock signal (CLK),
- assigning each of multiple input signal values to a counter value of the counter (11), and
- comparing a present input signal value with a present counter value,
**characterized by**
- resetting the counter (11) when the input signal value corresponds to a counter value allocated by a prescribed allocation table, so that
- a prescribed signal value of the output counter signal (M) is phase-modulated on the basis of the input signal.

8. Method according to Claim 7, wherein the prescribed signal value is the MSB of the counter (11) .

9. Method according to Claim 7 or 8, wherein the clock signal (CLK) has at least twice the frequency of the input signal, and the input signal (D) is subjected to a BPSK modulation by the counter (11).

10. Method according to Claim 7 or 8, wherein the clock signal (CLK) has at least four times the frequency of the input signal, and the input signal (D) is subjected to a QPSK modulation by the counter (11).

11. Hearing device having a digital phase modulator according to one of Claims 1 to 6.

12. Remote control having a digital phase modulator according to one of Claims 1 to 6.

## Revendications

1. Modulateur de phase numérique comportant
- un compteur (11) destiné à délivrer un signal de compteur (M) sur la base d'un signal d'horloge prédéterminé (CLK) et
- un comparateur (10), qui contient une valeur de compteur actuelle (Z) provenant du compteur et qui est destiné à recevoir un signal d'entrée (D) numérique et à comparer le signal d'entrée (D) à la valeur de compteur actuelle (Z),
**caractérisé en ce que** le comparateur (10) est conçu pour comparer le signal d'entrée (D) à la valeur de compteur actuelle (Z) sur la base d'une table de correspondance prédéterminée et pour réinitialiser le compteur (11) lorsque le signal d'entrée (D) correspond à une valeur de compteur affectée par l'intermédiaire de la table de correspondance,
- de manière à ce qu'une valeur de signal prédéterminée du signal de compteur (M) délivré soit modulée en phase en fonction du signal d'entrée (D).

2. Modulateur de phase numérique selon la revendication 1, dans lequel la valeur de signal prédéterminée est le MSB du compteur (11).

3. Modulateur de phase numérique selon la revendication 1 ou 2, dans lequel le signal d'horloge (CLK) présente au moins deux fois la fréquence du signal d'entrée (D), et le signal d'entrée (D) est soumis à une modulation BPSK par le compteur (11).

4. Modulateur de phase numérique selon la revendication 1 ou 2, dans lequel le signal d'horloge (CLK) présente au moins quatre fois la fréquence du signal d'entrée (D), et le signal d'entrée (D) est soumis à une modulation QPSK par le compteur (11).

5. Modulateur de phase numérique selon l'une des revendications précédentes, dans lequel le compteur (11) est cadencé par un oscillateur à quartz.

6. Modulateur de phase numérique selon l'une des revendications précédentes, dans lequel le compteur (11), le comparateur (10) et un étage de transmission sont intégrés dans un module logique commun.

7. Procédé pour générer un signal numérique modulé en phase par les étapes consistant à
- incrémenter ou décrémenter en continu un compteur (11) sur la base d'un signal d'horloge prédéterminé (CLK),
- affecter chacune d'une pluralité de valeurs de signal d'entrée à une valeur de compteur du compteur (11) ; et
- comparer une valeur de signal d'entrée actuelle à une valeur de compteur actuelle,
**caractérisé par** l'étape consistant à
- réinitialiser le compteur (11) lorsque la valeur du signal d'entrée correspond à une valeur de compteur affectée par l'intermédiaire d'une table de correspondance prédéfinie,
- de manière à ce qu'une valeur de signal prédéterminée du signal de compteur (M) délivré soit modulée en phase en fonction du signal d'entrée.

8. Procédé selon la revendication 7, dans lequel la valeur de signal prédéterminée est le MSB du compteur (11).

9. Procédé selon la revendication 7 ou 8, dans lequel le signal d'horloge (CLK) présente au moins deux fois la fréquence du signal d'entrée, et le signal d'entrée (D) est soumis à une modulation BPSK par le compteur (11).

10. Procédé selon la revendication 7 ou 8, dans lequel le signal d'horloge (CLK) présente au moins quatre fois la fréquence du signal d'entrée, et le signal d'entrée (D) est soumis à une modulation QPSK par le compteur (11).

11. Appareil d'aide auditive comportant un modulateur de phase numérique selon l'une des revendications 1 à 6.

12. Commande à distance comportant un modulateur de phase numérique selon l'une des revendications 1 à 6.
